**Europäisches Patentamt**

**European Patent Office**

**Office européen des brevets**

(19)

(11) Publication number: **0 122 706**

**A1**

(12) # EUROPEAN PATENT APPLICATION

(21) Application number: **84301398.8**

(22) Date of filing: **02.03.84**

(51) Int. Cl.³: **G 01 C 11/06**
**G 06 G 7/19**

(30) Priority: **17.03.83 GB 8307374**
**19.05.83 GB 8313866**
**25.05.83 GB 8314411**

(43) Date of publication of application:
**24.10.84 Bulletin 84/43**

(84) Designated Contracting States:
**AT BE CH DE FR GB IT LI LU NL SE**

(71) Applicant: **AUDIM S.A.**
**5 Place de la Fusterie**
**CH-1204 Geneva(CH)**

(72) Inventor: **Hobrough, Gilbert L.**
**1300 Richards Street**
**Vancouver British Columbia V6B 3G6(CA)**

(74) Representative: **Weston, Robert Dale**
**c/o PHILLIPS & LEIGH 7 Staple Inn**
**Holborn London WC1V 7QF(GB)**

(54) Correlation method and apparatus.

(57) Disclosed herein is a method of and apparatus for the correlative synchronisation of two similar but not identical waveform signals; in a basic form of the invention two waveform signals are correlated and the envelope of each signal is correlated one with the other, the resulting two correlation signals are then weighted and summed; in an embodiment of the invention each waveform signal is filtered into a higher and a lower frequency band, the signals in the higher band are correlated and the envelopes of the higher band are filtered into the lower band and then correlated, also the signals in the lower band are correlated, the envelope correlation signal in the lower band is added to the lower band correlation signal and the resulting sum is weighted and summed with the higher band correlation signal; in another embodiment the waveform signals are filtered into a series of frequency bands and a matrix of correlators, envelope detectors, filters, adders and integrators correlate, weight and sum signals directly present in each band with those produced by filtering the envelopes of signals in higher bands; all the embodiments extract further data from waveform signals to improve the correlation therebetween; the invention has particular application in the field of high speed stereo-image correlation for photogrammetry and binocular artificial vision.

./...

Croydon Printing Company Ltd.

FIG.3

1.

## CORRELATION METHOD AND APPARATUS

This invention relates to the correlative synchronization of two similar but not identical signal waveforms which may, for example be derived from a pair of video cameras scanning a common scene from different viewpoints. The synchronization process is called stereo image-correlation and it enables the XYZ co-ordinates of all points in the scene to be determined. The method was developed originally to automate the measurement of terrain shape with two video cameras scanning a stereo pair of aerial photographs (see for example United States Patent Specification No. 3 621 326). A new application of stereo image-correlation is in 3D vision and space perception for industrial robots.

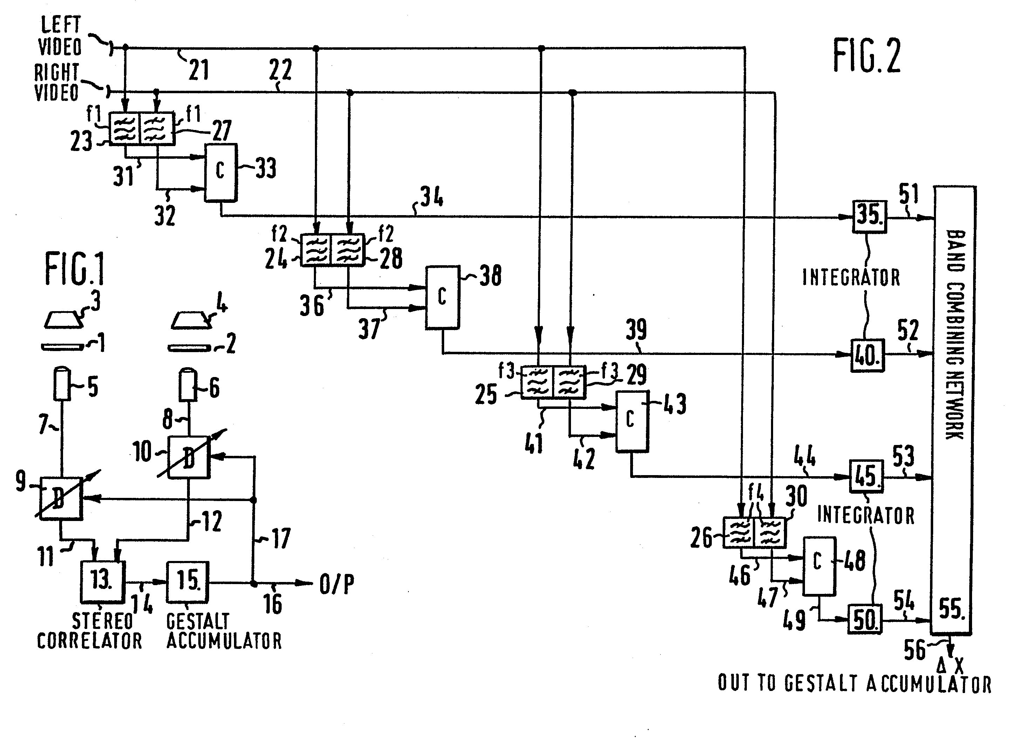

Stereo image-correlation is greatly simplified when the images are co-planar and when both images are scanned in a direction precisely parallel to a line joining the centres of the camera lenses. The process is hindered more fundamentally by the complex differences in shape, of the left and right images, introduced by the different viewpoints of the two cameras. As a result correlation and matching over an extended image area is not possible unless the two images are transformed into congruence during the process. Such an image transformation system requires a disparity discriminator to sense the shape differences (errors) and an accumulating memory to store the transformation parameters. Figure 1 illustrates the relationship between the elements of a stereo image-correlator as used in photogrammetry wherein a pair of transparent "diapositive" aerial photographs 1 and 2 (left and right respectively) are illuminated by light sources 3 and 4 respectively and viewed by left- and right-hand video cameras 5 and 6 respectively. The cameras generate time-varying left- and right-video signals on lines 7 and 8 respectively with both images being scanned in a direction precisely parallel to a line joining the projection centres of the two cameras, i.e. the stereo base-line. The video signals are delivered to a pair of variable video delays 9, 10 wherein the two signals have relative, correcting delays introduced in response to an input control signal on line 17. The variously delayed video signals are output on lines 11 and 12 to a stereo correlator 13 wherein a correlation error signal is computed and is delivered via line 14 to a synchronous Gestalt accumulator 15 wherein height data is accumulated. The output from the Gestalt accumulator on line 16 becomes the time integral of all the error signals between scanned homologous points in each camera's field-of-view and is the output signal from the system. The Gestalt accumulator output signal is also fed back along line 17 and forms the input control signal to the variable video delays. The action of the video

3.

delays are thus to introduce a balanced variable delay between the left and right video signals until the two signals are correlated. United States Patent Specification No. 3 958 232 describes a suitable video delay and the Gestalt accumulator is described in United States Patent Specification No. 3 595 995.

The application of such photogrammetric stereo image-correlation techniques to an artificial stereo vision system dealing with three-dimensional workspace environments is severely limited by the discontinuous nature of a workspace containing both close and distant objects separated from each other and from the background by significant distances.

As the stereo images from such a scene are scanned and processed, some objects produce high frequencies in the video signals, e.g. closely set vertical edges such as a stand of trees or vertical railings, and, for the reason previously given, these high frequencies do not contribute to the spread of correlation so that some means must be found to initiate the correlative matching process within each area containing these "high frequency" objects.

"Workspace" is defined herein as being all light reflecting surfaces visible in the <u>video camera's</u> field-of-view including background (e.g. walls, floors, ceilings etc.), and foreground and intermediate <u>objects</u> of any kind;

"Object" is defined herein as being any part or content of the workspace apart from the background, whether moveable or not;

"Video camera" is defined herein as being any image sensing device that employs an optical system (such as lens) to project an _image_ of an object on a photo-reactive surface and means to scan the surface in a pre-determined "X" direction to produce an electrical signal descriptive of the object;

"Image" is defined herein as being the optical system's projection of the workspace, including any objects present therein, on the photo-reactive surface of a video camera;  and

"Model" is defined herein as being the three dimensional representation of the workspace and the contents thereof built up and stored in the Gestalt accumulator of the system.

It is an object of the present invention to provide a method of and apparatus for correlating similar waveform signals.

According to the present invention, a method of correlating first and second waveform signals comprises the steps of:-

(i) correlating the first signal with the second signal to produce a first correlation signal;

(ii) detecting an envelope for each of said first and second signals;

0122706

5.

(iii) deriving a signal proportional to each envelope;

(iv) correlating the envelope signals to produce a second correlation signal;  and,

(v) weighting and summing said first correlation signal with said second correlation signal;

whereby correlation between the signal waveforms can be initiated by correlation between the lower frequency, envelope signals.

Also according to the present invention, apparatus for correlating similar first and second signal waveforms comprises:-

(i) first correlator means connected to receive and correlate the first signal with the second signal and produce a first correlation signal;

(ii) first envelope detector means connected to receive said first signal and detect an envelope therefor;

(iii) first deriving means connected to said first envelope detector means to derive a signal proportional to the first envelope;

(iv) second envelope detector means connected to receive said second signal and detect an envelope therefor;

(v) second deriving means connected to said second envelope detector means to derive a signal proportional to the second envelope;

(vi) second correlator means connected to said first and second deriving means to receive and correlate said first and second envelope signals and produce a second correlator signal; and,

(vii) means connected to said first and second correlator means to receive, weight and sum said first and second correlator signals.

By this means, if the time difference between the two signal waveforms is greater than the pull-in range of the first correlator, the output from the second correlator, which is a comparison of the lower frequency, envelope signals (itself a rough measure of the comparison between the two waveform signals), is stored in the Gestalt accumulator 15 and is then fed back as a correlation error signal to the variable video delays 9, 10; which will reduce the time difference between the two waveform signals to within the pull-in range of the first correlator.

The envelope detector means may be a rectifier, the deriving means a filter to pass only the envelope signal, the weighting means an attenuator and the summing means an adder.

If no lower frequency components are present in the detected envelope, correlation cannot occur even though lower frequency components may be present in the original signal and it is an object of an embodiment of the present invention to overcome this drawback.

According to an embodiment of the present invention, a method of correlating similar first and second signal waveforms comprises the steps of:-

(i) filtering the spectrum of the first signal into a higher and a lower frequency band;

(ii) filtering the spectrum of the second signal into said higher and lower frequency bands;

(iii) correlating the first signal with the second signal in the higher band;

(iv) detecting an envelope for the first signal in the higher band;

(v) filtering the spectrum of the resulting first signal envelope into the lower band;

(vi) detecting an envelope for the second signal in the higher band;

(vii) filtering the spectrum of the resulting second signal envelope into the lower band;

(viii) correlating the component of the first signal envelope with the components of the second signal envelope in the lower band to produce a second correlation signal;

(ix) correlating the first signal with the second signal in the lower band to produce a third correlation signal;

(x) summing the second and third correlation signals; and,

(xi) weighting and summing the first correlation signal and the sum of the second and third correlation signals.

Also according to an embodiment of the present invention apparatus for correlating similar first and second signal waveforms comprises:-

(i) a network of first filter means connected to receive and filter the spectrum of the first signal into a higher and a lower frequency band;

(ii) a network of second filter means connected to receive and filter the spectrum of the second signal into said higher and lower frequency bands;

(iii) first correlator means connected to respective first and second filter means to receive and correlate the first signal with the second signal in the higher band and produce a first correlation signal;

(iv) first envelope detector means connected to respective first filter means to detect an envelope for the first signal in the higher band;

(v) third filter means connected to the first envelope detector means to receive and filter the spectrum of the resulting first signal envelope into the lower band;

(vi) second envelope detector means connected to respective second filter means to receive and detect an envelope for the second signal in the higher band;

(vii) fourth filter means connected to the second envelope detector to filter the spectrum of the resulting second signal envelope into the lower band;

(viii) second correlator means connected to the third and fourth filter means to receive and correlate the first signal envelope components with the second signal envelope components in the lower band to produce a second correlation signal;

(ix) third correlator means connected to respective first and second filter means to receive and correlate the first signal with the second signal in the lower band to produce a third correlation signal;

(x) adder means connected to the second and third correlator means to receive and sum the second and third correlation signals; and

(xi) means connected to the first correlator means and the adder means to weight and sum the first correlation signal and the sum of the second and third correlation signals.

It is also a known technique from photogrammetry for correlation to proceed iteratively because a partial shape correction of errors extending over relatively large areas of the images leads to an improvement in the discrimination of errors extending over smaller areas. Iterative correlation is carried out by dividing the video spectrum into frequency bands and correlating the bands separately starting with the lowest frequency band and proceeding step by step to the highest frequency band. Preferably the bands should have substantially equal frequency ratios, and should cover the entire signal spectrum in a contiguous set. In general the lower the frequency ratio, the greater the number of bands and the better the discrimination. A band frequency ratio of 2:1 seems close to optimum and is a convenient ratio for digital systems using binary arithmetic.

The precision of each band is proportional to its centre frequency so that the highest frequency band sets the system accuracy. Unfortunately the maximum error that can be accommodated by a band (pull-in range) is inversely proportional to its centre frequency. In general a band will not function if the images are not pre-matched to the precision of the next lower band. It is therefore necessary to the continuity of the process that each band in turn make its contribution to image correlation and transformation. Such a contribution is not possible if the imagery does not happen to contain data in one or more bands and the process may then come to a halt.

Experience with high speed stereo-image correlators for photogrammetry has shown that such failures, while rare, are frequent enough to require continuous monitoring by an operator who can quickly re-establish the process.

The principle of multiple band discrimination is known for example from United States Patent Specification No. 3 651 416 and for convenience which will be apparent later, Figure 2 illustrates a four band disparity discriminator wherein the components are shown in a diagonal arrangement.

Referring to Figure 2, signals for left- and right-hand video channels are input on lines 21 and 22 respectively. Band-pass filters 23, 24, 25 and 26, select contiguous sections of video spectrum to define bands I, II, III and IV respectively, for the left video channel. The band-pass filters 27, 28, 29 and 30 select corresponding sections of the video spectrum for the right channel. Band I is assumed to be the highest frequency band, and band IV is assumed to be the lowest frequency band of the four band system illustrated. The left and right video components for band I are delivered by filters 23 and 27 respectively, on lines 31 and 32 respectively, to a comparator 33 which delivers an error signal, for band I, via line 34 to integrator 35. Similarly the video components for band II are delivered by filters 24 and 28 via lines 36 and 37 to comparator 38 which delivers an error signal for band II via line 39 to integrator 40. In an analogous manner filters 25 and 29 deliver video components via lines 41 and 42 to comparator 43 which delivers an error signal for band III via line 44 to integrator 45 and filters 26 and 30 deliver components via lines 46 and 47 to comparator 48 which delivers an error signal for band IV on line 49 to integrator 50.

The integrated error signals for bands I, II, III and IV from integrators 35, 40, 45 and 50 respectively

0122706

12.

are delivered via lines 51, 52, 53 and 54 to the band combining network 55. The combining network weights the integrated error signals for each band and delivers the sum of the weighted integrated error signal as a combined error signal on line 56, corresponding to line 14 in Figure 1.

It is an object of a further embodiment of the present invention to provide more correlatable data in each band and this is achieved by the addition of envelope signal data, thereby to reduce or eliminate such failures.

According to a further embodiment of the present invention, a method of producing an error signal for the correlative synchronisation of similar first and second signal waveforms comprises the steps of:-

(i) dividing the spectrum of the first signal into frequency bands;

(ii) dividing the spectrum of the second signal into said frequency bands;

(iii) for each band:

(a) correlating the first signal with the second signal to produce an error signal,

(b) detecting an envelope for the first signal,

(c) dividing the spectrum of the resulting first signal envelope into the bands below that band in said frequency bands,

(d) detecting an envelope for the second signal, and

13.

(e)    dividing the spectrum of the resulting second
       signal envelope into the bands below that band in
       said frequency bands;

(iv) for each but the highest band:

(a)    correlating each of the separately derived first
       signal envelope components with each of the
       respective separately derived second signal
       envelope components to produce error signals,

(b)    summing the error signal produced by the comparison
       of the first signal with the second signal and each
       of the error signals produced by the comparisons of
       the first and second signal envelope components, and

(c)    integrating the sum of the error signals;

(v) integrating the error signal produced by the
comparison of the first signal with the second signal
for the highest band;   and

(vi) weighting and summing the integrated error
signals to produce a combined error signal.

Also according to a further embodiment of the present
invention, apparatus for the correlative synchronisation
of similar first and second signal waveforms comprises:-

(i) a network of first filter means connected to
receive and divide the spectrum of the first signal into
frequency bands;

(ii) a network of second filter means connected to
receive and divide the spectrum of the second signal
into said frequency bands;

(iii) for each band:

(a) first correlator means connected to respective first and second filter means to correlate the first signal with the second signal and produce an error signal,

(b) first envelope detector means connected to each respective first filter means to detect an envelope for the first signal,

(c) a network of third filter means connected to each of said first envelope detector means to receive and divide the resulting first signal envelope into the bands below that band in said frequency bands,

(d) second envelope detector means connected to each respective second filter means to detect an envelope for the second signal,

(e) a network of fourth filter means connected to each of said second envelope detector means to receive and divide the resulting second signal envelope into the bands below that band in said frequency bands;

(iv) for each but the highest band:

(a) second correlator means each connected to a respective one of the third and fourth filter means to correlate each of the separately derived first signal envelope components and produce error signals,

(b)   adder means connected to the first comparator
      means and to the second comparator means to sum
      the error signals, and

(c)   integrator means connected to receive and integrate
      the error signal sum;

      (v) further integrator means connected to the first
comparator means for the highest band to integrate the
error signal produced thereby;   and

      (vi) means to weight and sum the integrated error
signals and produce a combined error signal.

      In a modification to this further embodiment, the
lowest frequency band steps (iii) (b), (c), (d) and (e)
are omitted.

      The above and other features of the present invention
are illustrated, by way of example, in the Drawings,
wherein:-

      Fig. 3 is a block diagram of correlation apparatus
in accordance with the invention;

      Figs. 4a, b, c are signal diagrams illustrative of
the apparatus of Fig. 3;

      Fig. 5 is a block diagram of correlation apparatus
in accordance with an embodiment of the invention, and

      Fig. 6 is a block diagram of disparity discriminator
apparatus for a stereo video vision system in accordance
with a further embodiment of the invention.

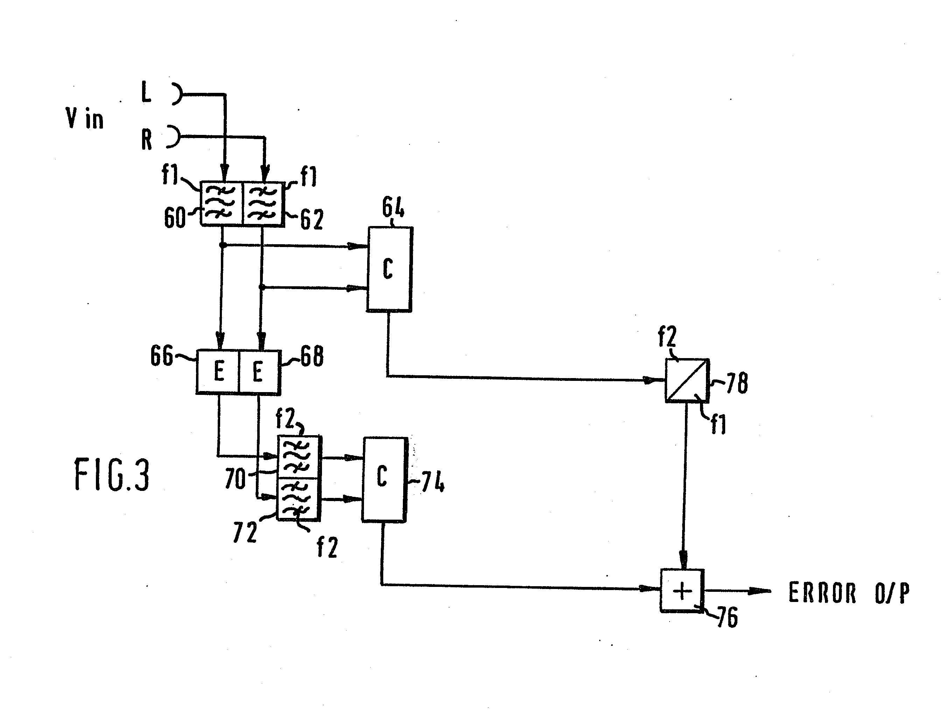

      As shown by Fig. 3, correlation apparatus for two
video signals for the right- and left-hand channels of a binocular artificial vision system consists of a first bandpass filter 60, 62 for each channel (R.CH) and (L.CH); the outputs of these two first filters being connected to the inputs of a first comparator 64 and to the input of a respective full-wave rectifier 66, 68. A second bandpass filter 70, 72 is connected to each rectifier 66, 68 respectively and the outputs of these two second filters are connected to the inputs of a second comparator 74. The output of comparator 64 is connected to one input of an adder 76 via an attenuator 78 whilst the output of comparator 74 is directly connected to another input of adder 76.

The first bandpass filters set the upper and lower frequencies of the video signals, about a centre frequency f1, to be correlated by the apparatus and the second bandpass filters are set to reject the rectified video signals and the D.C. component thereof, all about a centre frequency f2.

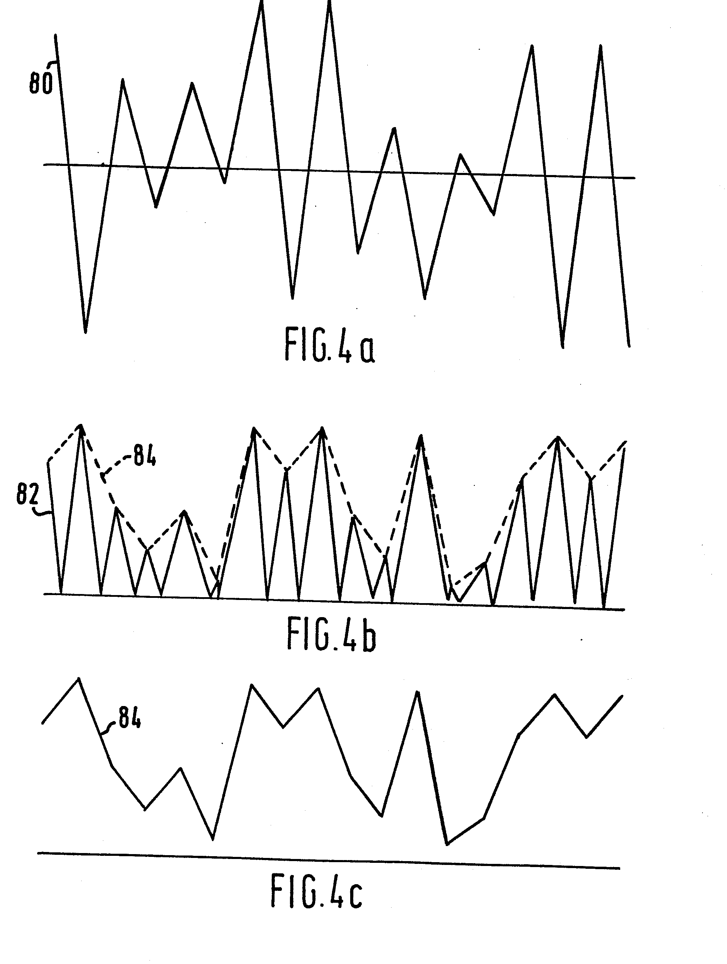

The action of the apparatus is illustrated by Figs. 4a to c which show, in Fig. 4a, a high frequency alternating waveform 80 (in a very diagrammatic form) that represents one of the video signals input to the apparatus. Fig. 4b represents the output signal from the full-wave rectifier which shows a waveform 82 to be the rectified video signal 80 (doubled in frequency) and, in dotted line, an envelope 84 connecting the peaks of waveform 82. This envelope 84 is shown more clearly

0122706

17.

in Fig. 4c to be an amplitude varying signal, of lower frequency than the original video signal, having a D.C. component.    The envelope signal 84 is the "ripple" in the rectified signal 82 and the video signal 80 can be seen to be somewhat akin to an amplitude modulated waveform;   the envelope signal modulating the amplitude of the video (i.e. carrier) signal.

The two video signals are first compared in comparator 64 which produces an output, video correlation signal Vcs.    At the same time, two derived envelope signals are compared in comparator 74 which produces an output, envelope correlation signal Ecs. The attenuator 78 is set to divide the video correlation signal by a factor N, equal to the ratio of the centre frequencies f1 and f2 of the first and second bandpass filters.    This division, or weighting, of the video correlation signal ensures that the effects of the two correlation signals are balanced at the inputs to the adder 76.    If the difference between the two video signals exceeds the pull-in range of comparator 60, the lower frequency envelope signals should still be within the pull-in range of comparator 74 and the effect of the envelope correlation signal will predominate in the output from the apparatus.

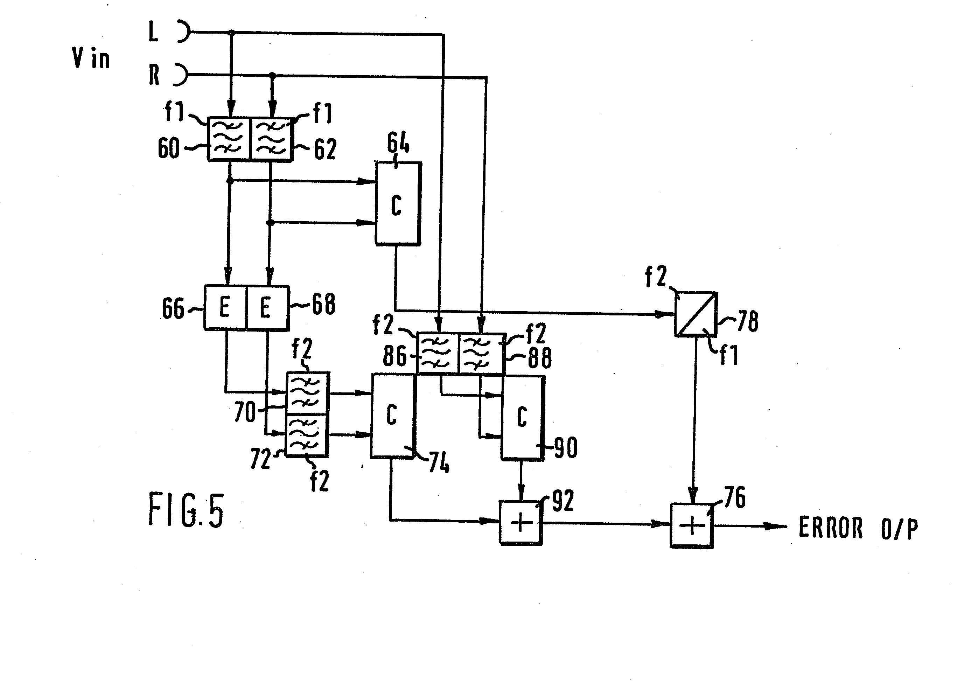

An embodiment of the invention is shown in Fig. 5, wherein like references have been given to like parts. Additionally, a third band-pass filter pair 86, 88, is provided one for each channel; these filters are set about the lower centre frequency f2. A third comparator 90 is connected to the outputs of these third filters and another adder 92 is connected to the output of comparators 74 and 90, i.e. serially before adder 76.

The action of this additional circuitry is to produce a further correlation signal resulting from the comparison of the two video signals in the lower of the two frequency bands, centred on f2. This correlation signal is added to the envelope correlation signal, ECS, for the same frequency band and the signal sum is then weighted and summed with the correlation signal, VCS, for the higher frequency band, centred on f1.

Thus absence of data in the envelope signal for the lower band need not prevent correlation being established if lower band data is present in the original video signals.

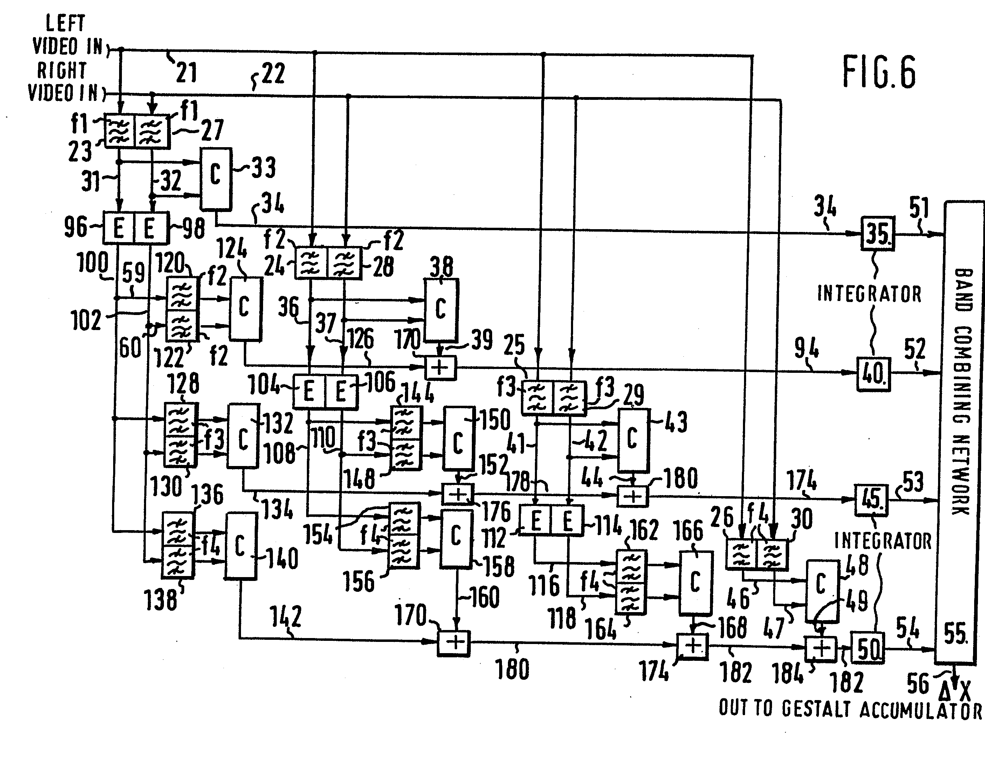

Fig. 6 shows a complete signal and envelope disparity discriminator matrix including the signal only components of Fig. 2. Each box marked E is an envelope detector or demodulator as described above. Each box marked + is an adder or summing point having two input ports and one output port.

Referring to Fig. 6 envelope detectors 96 and 98 receive band I video components for the left and right channels via lines 31 and 32 respectively and deliver left and right band I envelopes on lines 100 and 102 respectively. In like manner envelope detectors 104 and 106 receive band II video components for the left and right channels on lines 36 and 37 respectively and deliver band II envelopes on lines 108 and 110 respectively. Lastly envelope detectors 112 and 114 receive band III video components for the left and right channels on lines 41 and 42 respectively, and deliver left and right band III envelopes on lines 116 and 118 respectively.

Considering first the envelopes for band I which only contain frequencies lower than band I:

Band pass filters 120 and 122 extract band II components from the left and right band I envelopes on lines 100 and 102 respectively and deliver them to comparator 124 which delivers an error signal for band II on line 126. Similarly, the band pass filters 128 and 130 extract band III components from the left and right band I envelopes on lines 100 and 102 respectively and deliver them to comparator 132 which delivers an error signal for band III on line 134. Likewise the band pass filters 136 and 138 extract band IV components from the band I envelopes and deliver them to comparator 140 which delivers an error signal for band IV on line 142.

Considering next the envelopes for band II which only contain frequencies lower than band II:

Band pass filters 144 and 148 extract band III components from the left and right band II envelopes on lines 108 and 110 respectively, and deliver them to comparator 150 which delivers an error signal for band III on line 152. Similarly the band pass filters 154 and 156 extract band IV components from the left and right band II envelopes and deliver them to comparator 158 which delivers an error signal for band IV on line 160.

Considering next the envelopes for band III which only contain frequencies lower than band III:

Band pass filters 162 and 164 extract band IV components from the left and right band III envelopes on lines 116 and 118 respectively, and deliver them to comparator 166 which delivers an error signal for band IV on line 168.

It will be seen that the error signal, on line 126 and the error signal on line 39, already described in connection with Fig. 2, are delivered to adder 170 which delivers a signal, on line 94, representing the sum of the two error signals from the band II signal comparator 38, and the band II data on the band I envelope from comparator 124. The combined error signal, on line 94 is delivered to the integrator 40 which functions as described above in connection with Fig. 2.

Similarly it will be seen that the signal on line 174 and delivered to integrator 45, represents the sum of three band III error signals derived from

21.

the comparators for; the band III video on line 44, and the band III data on each of the envelopes for bands I, and II, on lines 134 and 152 respectively; summed by adder 176 and delivered on line 178 to adder 180 which adds the error signal on line 44 from comparator 43.

Lastly it will be seen that the signal on line 182 and delivered to integrator 50, represents the sum of four band IV error signals derived from the comparators for; the band IV video, on line 49, and the band IV data on each of the envelopes for bands I, II and III, on lines 142, 160 and 168 respectively; the summations taking place in adders 170, via line 180 to adder 174 and via line 182 to adder 184.

22.

CLAIMS:

1.    A method of correlating similar first and second waveform signals comprising the step of:-

(i)    correlating the first signal with the second signal to produce a first correlation signal, characterised by the further steps of:-

(ii)    detecting an envelope for each of the first and second signals;

(iii)    deriving a signal proportional to each envelope;

(iv)    correlating the envelope signals to produce a second correlation signal; and

(v)    weighting and summing the first correlation signal with the second correlation signal; whereby correlation between the signal waveforms can be initiated by correlation between the lower frequency, envelope signals.

2.    Apparatus for correlating similar first and second signal waveforms comprising:-

(i)    first correlator means connected to receive and correlate the first signal with the second signal and produce a first correlation signal, characterised in that:-

(ii)    first envelope detector means (66) are connected to receive the first signal and detect an envelope therefor;

(iii)    first deriving means (70) are connected to the first envelope detector means to derive a signal proportional to the first envelope;

(iv)    second envelope detector means (68) are connected to receive the second signal and detect an envelope therefor;

(v)    second deriving means (72) are connected to the second envelope detector means to derive a signal proportional to the second envelope;

(vi)    second correlator means (74) are connected to the first and second deriving means to receive and correlate the first and second envelope signals and produce a second correlation signal; and,

(vii)    means (76 and 78) are connected to the first (64) and second correlator means to receive, weight and sum the first and second correlation signals.

3.    Apparatus as claimed in claim 2, and further characterised in that each envelope detector means is a rectifier (66,68) each deriving means is a filter (70,72) arranged to pass only the envelope signal, the weighting means is an attenuator (78) and the summing means is an adder (76).

4.    A method of correlating similar first and second signal waveforms comprising the steps of:-

24.

(i)     filtering the spectrum of the first signal into a higher and a lower frequency band;

(ii)     filtering the spectrum of the second signal into said higher and lower frequency bands;

(iii)     correlating the component of the first signal with the component of the second signal in the higher band to produce a first correlation signal characterised by the further steps of:-

(iv)     detecting an envelope for the first signal in the higher band;

(v)     filtering the spectrum of the resulting first signal envelope into the lower band;

(vi)     detecting an envelope for the second signal in the higher band;

(vii)     filtering the spectrum of the resulting second signal envelope into the lower band;

(viii)     correlating the component of the first signal envelope with the component of the second signal envelope in the lower band to produce a second correlation signal;

(ix)     correlating the component of the first signal with the component of the second signal in the lower band to produce a third correlation signal;

(x)     summing the second and third correlation signals; and,

25.

(xi)    weighting and summing the first correlation signal and the sum of the second and third correlation signals.

5.      Apparatus for correlating similar first and second signal waveforms comprising:-

(i)     a network of first filter means connected to receive and filter the spectrum of the first signal into a higher and a lower frequency band;

(ii)    a network of second filter means connected to receive and filter the spectrum of the second signal into said higher and lower frequency bands;

(iii)   first correlator means connected to respective first and second filter means to receive and correlate the component of the first signal with the component of the second signal in the higher band and produce a first correlation signal, characterised in that:-

(iv)    first envelope detector means (66) are connected to respective first filter means (60) to detect an envelope for the component of the first signal in the higher band;

(v)     third filter means (70) are connected to the first envelope detector means to receive and filter the spectrum of the resulting first signal envelope into the lower band;

(vi)     second envelope detector means (68) are connected to respective second filter means (62) to receive and detect an envelope for the component of the second signal in the higher band;

(vii)    fourth filter means (72) are connected to the second envelope detector to filter the spectrum of the resulting second signal envelope into the lower band;

(viii)   second correlator means (74) are connected to the third and fourth filter means to receive and correlate the first signal envelope component with the second signal envelope component in the lower band to produce a second correlation signal;

(ix)     third correlator means (90) are connected to respective first (86) and second (88) filter means to receive and correlate the component of the first signal with the component of the second signal in the lower band to produce a third correlation signal;

(x)      adder means (92) are connected to the second and third correlator means to receive and sum the second and  third correlation signals; and

(xi)     means (76 and 78) are connected to the first correlator means (64) and the adder means to

27.

weight and sum the first correlation signal and the sum of the second and third correlation signals.

6.    A method of producing an error signal for the correlative synchronization of similar first and second signal waveforms comprising the steps of:-

(i)    dividing the spectrum of the first signal into frequency bands;

(ii)    dividing the spectrum of the second signal into said frequency bands, characterised by the further steps of:-

(iii)    for each band:

(a) correlating the first signal component with the second signal component to produce an error signal,

(b) detecting an envelope for the first signal component,

(c) dividing the spectrum of the resulting first signal envelope into the bands below that band in said frequency bands,

(d) detecting an envelope for the second signal component, and

(e) dividing the spectrum of the resulting second signal envelope into the bands below that band in said frequency bands;

(iv)    for each but the highest band:

(a) correlating each of the separately derived first signal envelope components with each of the

28.

respective separately derived second signal envelope components to produce error signals,

(b) summing the error signal produced by the comparison of the first signal component with the second signal component and each of the error signals produced by the comparisons of the first and second signal envelope components, and

(c) integrating the sum of the error signals;

(v) integrating the error signal produced by the comparison of the first signal component with the second signal component for the highest band; and

(vi) weighting and summing the integrated error signals to produce a combined error signal.

7. Apparatus for producing an error signal for the correlative synchronization of similar first and second signal waveforms comprising:-

(i) a network of first filter means connected to receive and divide the spectrum of the first signal into frequency bands;

(ii) a network of second filter means connected to receive and divide the spectrum of the second signal into said frequency bands, characterised in that:-

(iii) for each band:

(a) first correlator means (33 or 38 or 43 or 48) are connected to respective first and second filter means (23 and 27 or 24 and 28 or 25 and 29 or 26 and 30) to correlate the first signal component with the second signal component and produce an error signal,

(b) first envelope detector means (96 or 104 or 112) are connected to each respective first filter means (23 or 24 or 25) to detect an envelope for the first signal component,

(c) a network of third filter means (120 and 128 and 136 or 144 and 154 or 162) are connected to each of the first envelope detector means to receive and divide the spectrum of the resulting first signal envelope into the bands below that band in said frequency bands,

(d) second envelope detector means (98 or 106 or 114) are connected to each respective second filter means (27 or 28 or 29) to detect an envelope for the second signal component,

(e) a network of fourth filter means (122 and 130 and 138 or 148 and 156 or 164) are connected to each of the second envelope detector means to receive and divide the spectrum of the resulting second signal envelope into the bands below that band in said frequency bands;

(iv)  for each but the highest band:

(a) a second correlator means (124 and 132 and 140 or 150 and 158 or 166) are each connected to a respective one of the third and fourth filter means to correlate each of the separately derived first signal envelope components with each of the respective separately derived second signal envelope components and produce error signals,

(b) adder means (170 or 176 and 180 or 171 and 174 and 184)are connected to the first comparator means and to the second comparator means to sum the error signals, and

(c) integrator means (40 or 45 or 50) are connected to receive and integrate the error signal sum;

(v)    further integrator means (35) are connected to the first comparator means for the highest band to integrate the error signal produced thereby; and

(vi)    means (55) are connected to all the integrator means to weight and sum the integrated error signals and produce a combined error signal.

8.    A method as claimed in claim 6 and further characterised in that, for the lowest frequency band, steps (iii) (b), (c), (d) and (e) are omitted.

9.    Apparatus as claimed in claim 7 and further characterised in that, for the lowest frequency band, parts (iii) (b), (c), (d) and (e) are omitted.

FIG.2

FIG.1

LEFT VIDEO

RIGHT VIDEO

STEREO CORRELATOR

GESTALT ACCUMULATOR

BAND COMBINING NETWORK

INTEGRATOR

INTEGRATOR

OUT TO GESTALT ACCUMULATOR

O/P

$\Delta X$

0122706

1/5

FIG.3

0122706

80

FIG.4a

84

82

FIG.4b

84

FIG.4c

FIG.5

FIG.6

BAND COMBINING NETWORK

INTEGRATOR

INTEGRATOR

LEFT VIDEO IN

RIGHT VIDEO IN

OUT TO GESTALT ACCUMULATOR

$\Delta X$

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 024 234 (HOBROUGH) <br> * Pages 4,5 * | 1,2 | G 01 C 11/06 <br> G 06 G 7/19 |

-----

|  |  |  | TECHNICAL FIELDS SEARCHED (Int. Cl. ³) |
|---|---|---|---|
|  |  |  | G 01 C <br> G 06 G <br> H 04 N <br> G 10 L |

The present search report has been drawn up for all claims

| Place of search <br> THE HAGUE | Date of completion of the search <br> 26-06-1984 | Examiner <br> DE BUYZER H.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

               

& : member of the same patent family, corresponding document

EPO Form 1503. 03.82